# EUROPEAN PATENT APPLICATION

(11) **EP 4 610 896 A1**
(43) Date of publication of application: **03.09.2025**
(21) Application number: 22963424.1
(22) Date of filing: 25.10.2022
(51) Int. Cl.: G06N 20/00

(54) **DATA-GENERATING METHOD, DATA-GENERATING PROGRAM, AND DATA-GENERATING DEVICE**

(71) Applicant: FUJITSU LIMITED, Kawasaki-shi, Kanagawa 211-8588 (JP)
(72) Inventor: YAMAO, Sosuke, Kawasaki-shi, Kanagawa 211-8588 (JP)
(74) Representative: Hoffmann Eitle
(86) International application number: PCT/JP2022/039766
(87) International publication number: WO 2024/089772

(57) **Abstract**

A data generation device acquires an inference result of skeleton information for each piece of teacher data when teacher data is input to a machine learning model, which includes an error of each part of a skeleton. The data generation device specifies first teacher data in which an error of a first part is greater than an error of the first part of another piece of the teacher data from the teacher data using the inference result. The data generation device specifies second teacher data in which an error of a second part is greater than an error of the second part of another piece of the teacher data from the teacher data using the inference result. The data generation device generates third teacher data by replacing information regarding the second part included in the first teacher data with information regarding the second part included in the second teacher data.

## Description

### FIELD

The present invention relates to a data generation method and the like.

### BACKGROUND

A technology of detecting skeleton information regarding a person captured by a camera using image data of the person has been established. The skeleton information is information indicating coordinates of each joint of the person. In such a technology, a plurality of pieces of teacher data is prepared, and supervised learning is executed on a machine learning model such as a deep learning network. By inputting time-series image data of the person to the trained machine learning model, it is possible to detect time-series skeleton information regarding the person.

Here, by processing existing teacher data and adding the processed teacher data as new teacher data, it is possible to improve general-purpose performance and robustness of the machine learning model. For example, there is a technology of generating new teacher data by adding geometric transformation or noise to teacher data or moving an image patch of a body part.

Furthermore, there is a technology of extending teacher data to generate new teacher data. In this data extension technology, gradient information regarding an inference error of a machine learning model being trained is fed back, and teacher data that maximizes performance of the machine learning model is generated at each training stage. For example, in the data extension technology, a three-dimensional model of a person is projected on a two-dimensional plane to generate image data of the teacher data. In the data extension technology, rotation, translation, and the like of the three-dimensional model are performed based on the gradient information, and the image data that increases the inference error of the machine learning model is generated. In the data extension technology, a discriminator that excludes such image data in a case where a posture of the person in the image data is an impossible posture of the person is provided. The processing of generating the image data from the three-dimensional model using the gradient information is referred to as differentiable data extension.

Examples of the data extension technology described above include data extension technologies (1) to (3) as described below.

The data extension technology (1) will be described. In the data extension technology (1), image data for increasing an inference error of a machine learning model (object detection model) is generated using neural radiance fields (NeRFs). For example, in the data extension technology (1), a domain (360°) of a camera angle serving as a control parameter of image generation is divided into k = 8 bins, and a selection probability (categorical distribution) of the bin is formulated by Gambel-softmax. In the data extension technology (1), the selection probability of the bin is simultaneously used for training in a direction in which the inference error is maximized while performing training of the machine learning model.

The data extension technology (2) will be described. In the data extension technology (2), for a machine learning model that converts 2D skeleton information into 3D skeleton information, pair data of the 2D skeleton information and the 3D skeleton information that increases an inference error of the machine learning model is generated. For example, in the data extension technology (2), an extension operation usable for training for existing 3D skeleton information is expressed by a multilayer perceptron. The extension operation includes perturbation of a joint angle, perturbation of a bone length, and perturbation of rotational translation. In the data extension technology (2), the training using the extension operation is executed in a direction in which the inference error is maximized while performing training of the machine learning model.

The data extension technology (3) will be described. In the data extension technology (3), a new 3D skeleton group is generated and added from existing 3D skeleton groups, and a teacher data set is increased. For example, in the data extension technology (3), processing of exchanging partial skeletons of two pieces of 3D skeleton information and processing of perturbing a joint angle are executed.

### SUMMARY

### TECHNICAL PROBLEM

However, in the conventional technologies described above, there is a problem that new teacher data tends to stay in the vicinity of existing teacher data, and new teacher data that is far from a distribution of the existing teacher data may not be generated.

For example, a case is assumed where new teacher data in another field is generated based on teacher data in a field of gymnastics. The another field is a field of a competition other than the gymnastics, rehabilitation, or the like. The teacher data in the field of the gymnastics is limited to certain 3D skeleton information that a person may take in the gymnastics. Therefore, in a case where a machine learning model based on the teacher data in the field of the gymnastics is used in the another field, inference accuracy may be deteriorated with respect to skeleton information that is not included in the teacher data.

In order to suppress the deterioration in the inference accuracy in the another field, it is desirable to retrain the machine learning model with new teacher data that is far from a distribution of existing teacher data. Note that, here, the description has been made using the teacher data in the field of the gymnastics, but the present invention is not limited to this.

In one aspect, an object of the present invention is to provide a data generation method, a data generation program, and a data generation device capable of generating new teacher data that is far from a distribution of existing teacher data.

### SOLUTION TO PROBLEM

In a first idea, a computer is caused to execute the following processing. The computer acquires an inference result of skeleton information for each piece of teacher data when a plurality of pieces of teacher data is input to a machine learning model, which includes an error of each part of a skeleton. The computer specifies first teacher data in which an error of a first part is greater than an error of the first part of another piece of the teacher data from the plurality of pieces of teacher data based on the inference result. The computer specifies second teacher data in which an error of a second part is greater than an error of the second part of another piece of the teacher data from the plurality of pieces of teacher data based on the inference result. The computer generates third teacher data by replacing information regarding the second part included in the first teacher data with information regarding the second part included in the second teacher data.

### ADVANTAGEOUS EFFECTS OF INVENTION

New teacher data that is far from a distribution of existing teacher data may be generated.

### BRIEF DESCRIPTION OF DRAWINGS

FIG. 1 is a diagram illustrating an example of a human body model.
FIG. 2 is a diagram illustrating an example of a joint name.
FIG. 3 is a diagram for describing processing of a data generation device according to the present embodiment.
FIG. 4A is a diagram for describing an attribute.
FIG. 4B is a diagram illustrating an example of the attribute and extension data.
FIG. 5 is a diagram for describing a body part p.
FIG. 6 is a diagram (1) for describing processing of an integration unit.
FIG. 7 is a diagram (2) for describing the processing of the integration unit.
FIG. 8 is a diagram illustrating an example of the extension data generated by the attribute and a weak point attribute.
FIG. 9 is a functional block diagram illustrating a configuration of the data generation device according to the present embodiment.
FIG. 10 is a flowchart illustrating a processing procedure of the data generation device according to the present embodiment.
FIG. 11 is a flowchart illustrating a processing procedure of integration processing.
FIG. 12 is a diagram for describing an effect of the data generation device according to the present embodiment.
FIG. 13 is a diagram illustrating an example of a hardware configuration of a computer that implements functions similar to those of the data generation device of the embodiment.

### DESCRIPTION OF EMBODIMENTS

Hereinafter, an embodiment of a data generation method, a data generation program, and a data generation device disclosed in the present application will be described in detail with reference to the drawings. Note that this invention is not limited by this embodiment.

### [Embodiment]

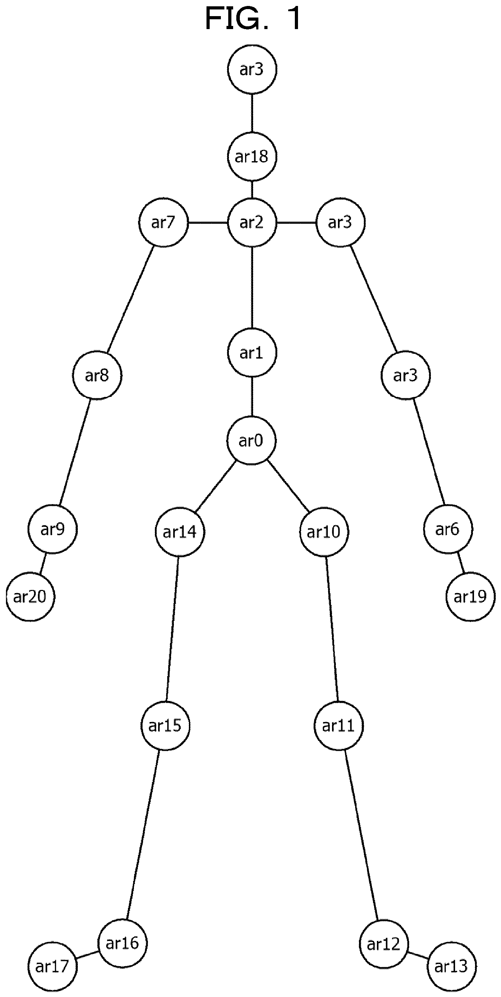

Prior to describing the present embodiment, an example of a human body model will be described. FIG. 1 is a diagram illustrating an example of the human body model. As illustrated in FIG. 1, the human body model is defined by 21 joints ar0 to ar20. In skeleton information used in the present embodiment, two-dimensional or three-dimensional coordinates are set for each of the joints ar0 to ar20 defined in the human body model.

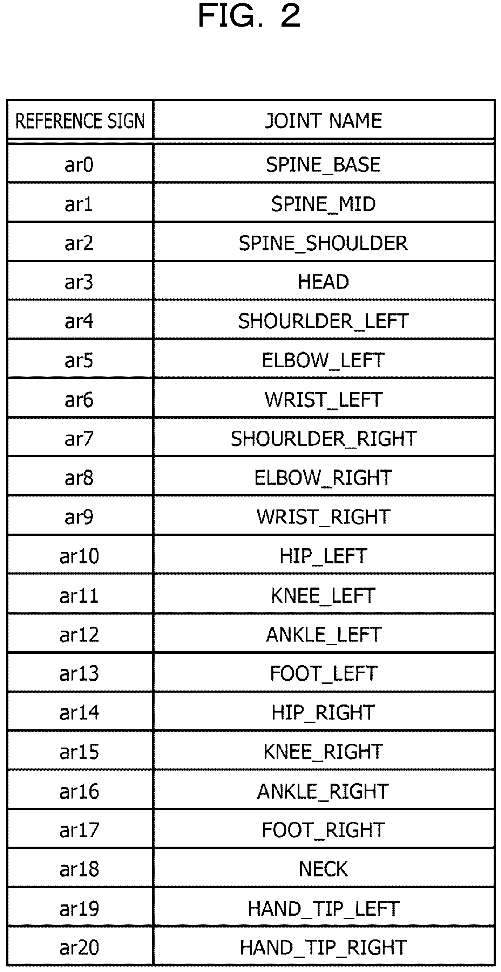

A relationship between each of the joints ar0 to ar20 illustrated in FIG. 1 and a joint name is as illustrated in FIG. 2. FIG. 2 is a diagram illustrating an example of the joint name. For example, the joint name of the joint ar0 is "SPINE_BASE". The joint names of the joints ar1 to a20 are as illustrated in FIG. 2, and description thereof is omitted.

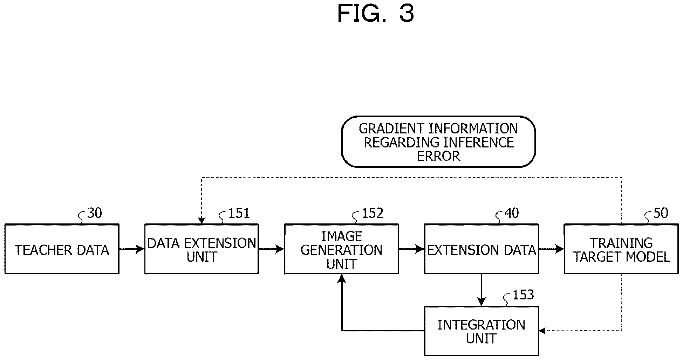

Subsequently, processing of a data generation device according to the present embodiment will be described. FIG. 3 is a diagram for describing the processing of the data generation device according to the present embodiment. The data generation device uses teacher data 30.

The teacher data 30 is existing data. For example, the teacher data includes image data of a person and an attribute. The attribute includes skeleton information, a camera parameter, and an appearance. The skeleton information indicates coordinates of the joints described with reference to FIG. 1, and indicates coordinates of each joint of the person included in the image data. The coordinates of each joint are two-dimensional coordinates or three-dimensional coordinates. The camera parameter indicates a viewpoint position of a camera that has captured the image data. The appearance is information regarding an appearance of the person or a background of the person included in the image data.

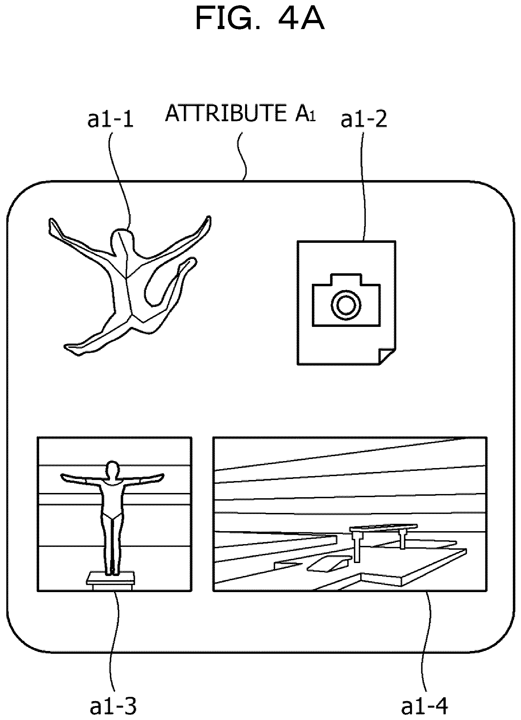

FIG. 4A is a diagram for describing the attribute. For example, an attribute A₁ of certain teacher data includes skeleton information a1-1, a camera parameter a1-2, and appearances a1-3 and a1-4. In FIG. 4A, the camera parameter a1-2 is illustrated as a conceptual illustration, but actually includes information regarding the viewpoint position of the camera that has captured the image data. The appearance (body type, color of a uniform, or the like) of the person is set in the appearance a1-3. Background information regarding the person is set in the appearance a1-4.

The description returns to FIG. 3. The data generation device inputs the teacher data 30 to a data extension unit 151.

A parameter θ₁ is set in the data extension unit 151, and the data extension unit 151 extends the attribute of the teacher data 30 based on such a parameter θ₁. The data extension unit 151 outputs information regarding the extended attribute to an image generation unit 152. The image generation unit 152 to be described later generates extension data 40 based on the attribute extended by the parameter θ₁, and such extension data 40 is input to a training target model 50 to calculate an inference error.

The data extension unit 151 trains the parameter θ₁ in a direction in which the inference error when the extension data 40 is input to the training target model 50 increases based on gradient information regarding the inference error fed back from the training target model 50.

For example, the data extension unit 151 changes, based on the parameter θ₁, a joint angle and a length of a bone between the joints of the skeleton information included in the attribute in the direction in which the inference error increases. The data extension unit 151 may perform, based on the parameter θ₁, data extension by adding changes in the camera parameter and the appearance in the direction in which the inference error increases.

In a case where the attribute is extended, the data extension unit 151 guarantees likelihood of the data. For example, the data extension unit 151 changes the joint angle within an operable range of the joint of the skeleton information. When changing the length of the bone, the data extension unit 151 changes the length of the bone within a predetermined range.

The image generation unit 152 generates the extension data 40 based on the information regarding the extended attribute by the data extension unit 151 or an integration unit 153. The image generation unit 152 is a differentiable image generator or the like, such as the NeRF. In the following description regarding the image generation unit 152, the "extended attribute" is simply referred to as the "attribute".

The image generation unit 152 generates a person model and a background model based on the skeleton information and the appearance included in the attribute. The image generation unit 152 generates the image data (extension data 40) from a viewpoint based on the camera parameter of the attribute information for a model obtained by combining the person model and the background model.

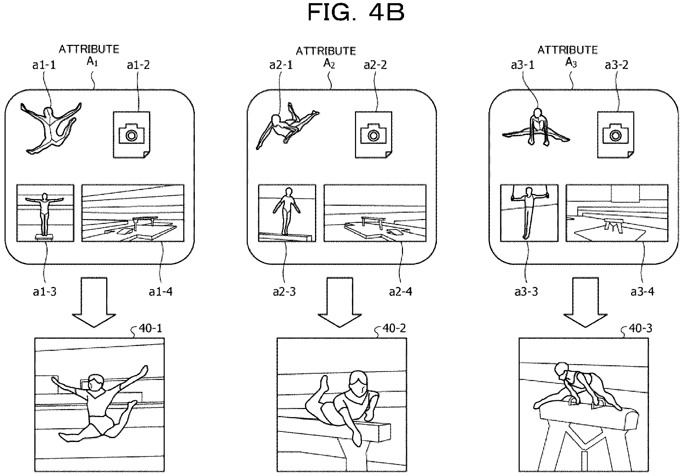

FIG. 4B is a diagram illustrating an example of the attribute and the extension data. The attribute A₁ includes the skeleton information a1-1, the camera parameter a1-2, and the appearances a1-3 and a1-4. The image generation unit 152 generates extension data 40-1 based on the attribute A₁.

An attribute A₂ includes skeleton information a2-1, a camera parameter a2-2, and appearances a2-3 and a2-4. The image generation unit 152 generates extension data 40-2 based on the attribute A₂.

An attribute A₃ includes skeleton information a3-1, a camera parameter a3-2, and appearances a3-3 and a3-4. The image generation unit 152 generates extension data 40-3 based on the attribute A₃.

The data generation device executes machine learning of the training target model 50 based on the extension data 40 and the skeleton information (skeleton information regarding the extended attribute) used when the extension data 40 is generated. For example, the skeleton information used when the extension data 40 is generated is used as a correct answer label. The training target model 50 is a neural network (NN) or the like. A parameter θ₂ is set in the training target model 50.

The data generation device inputs the extension data 40 to the training target model 50, and acquires an inference result output from the training target model 50. The data generation device updates the parameter θ₂ of the training target model 50 so as to reduce an inference error between the inference result and the correct answer label. The data generation device feeds back gradient information regarding the inference error to the data extension unit 151.

The data generation device outputs, to the integration unit 153, a set of inference result information indicating a relationship between the inference result and the true value (correct answer label) and the information regarding the attribute (extended attribute) used when the extension data 40 is generated in association with each other for each joint of the skeleton information.

The integration unit 153 executes the following processing based on the inference result information and the information regarding the extended attribute. In the following description regarding the integration unit 153, the "extended attribute" is simply referred to as the "attribute". For example, the integration unit 153 stands by until the parameter θ₂ is updated a plurality of times for the training target model 50, and acquires a plurality of the sets of the inference result information and the information regarding the attribute.

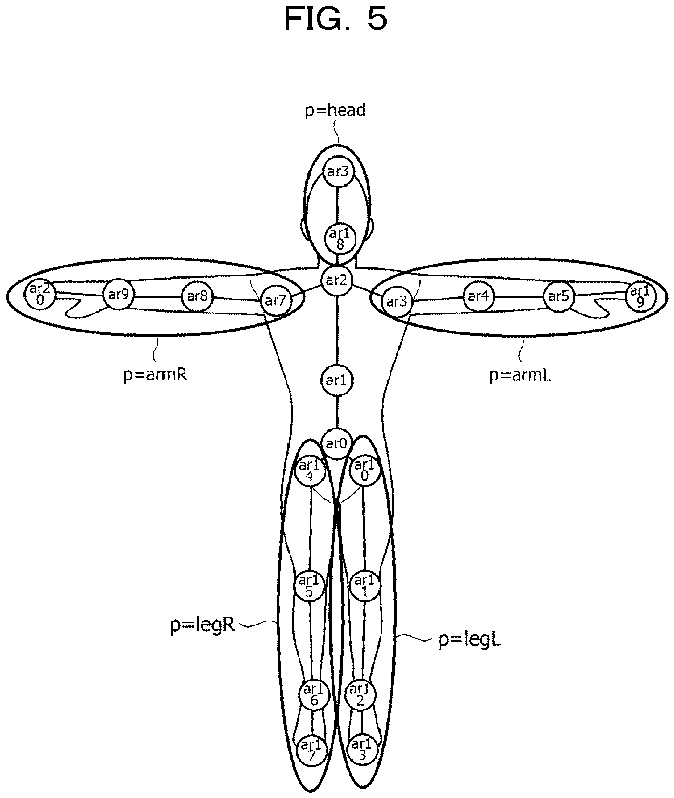

The integration unit 153 specifies an inference error for each body part p based on the inference result information. FIG. 5 is a diagram for describing the body part p. In the present embodiment, in a hierarchical structure of the joints, a joint group from a terminal joint to immediately before a branch point joint is defined as the body part p. Examples of the body part p include "head", "armL", "armR", "legL", and "legR". In other words, p ∈ {head, armL, armR, legL, legR} is defined.

The body part "head" corresponds to the joints ar3 and ar18. The body part "armL" corresponds to the joints ar4, ar5, ar6, and ar19. The body part "armR" corresponds to the joints ar7, ar8, ar9, and ar20. The body part "legL" corresponds to the joints ar10, ar11, ar12, and ar13. The body part "legR" corresponds to the joints ar14, ar15, ar16, and ar17.

The integration unit 153 specifies the inference error for each body part p for each piece of the inference result information. In other words, an inference error of each of the body parts "head", "armL", "armR", "legL", and "legR" is specified from one piece of the inference result information.

For example, the inference error of the body part "head" is a mean squared error (MSE) between inference results of the joints ar3 and ar18 and the true value. The inference error of the body part "armL" is an MSE between inference results of the joints ar4, ar5, ar6, and ar19 and the true value. The inference error of the body part "armR" is an MSE between inference results of the joints ar7, ar8, ar9, and ar20 and the true value. The inference error of the body part "legL" is an MSE between inference results of the joints ar10, ar11, ar12, and ar13 and the true value. The inference error of the body part "legR" is an MSE between inference results of the joints ar14, ar15, ar16, and ar17 and the true value.

The integration unit 153 compares each inference error for each body part p calculated from each piece of the inference result information, and specifies a maximum value of the inference error for each body part p and the attribute corresponding to the inference result information with the maximum value of the inference error.

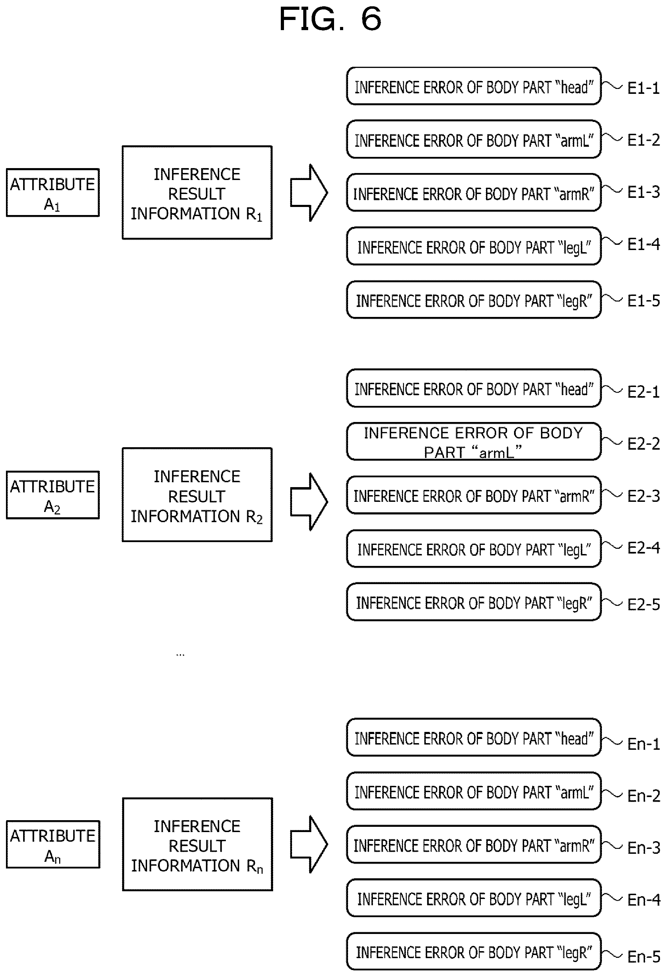

FIG. 6 is a diagram (1) for describing processing of the integration unit. In the example illustrated in FIG. 6, inference result information obtained by inputting the extension data generated based on the attribute A₁ to the training target model 50 is set as inference result information R₁. The inference error of the body part "head" obtained based on the inference result R₁ is set as an inference error E1-1. The inference error of the body part "armL" obtained based on the inference result R₁ is set as an inference error E1-2. The inference error of the body part "armR" obtained based on the inference result R₁ is set as an inference error E1-3. The inference error of the body part "legL" obtained based on the inference result R₁ is set as an inference error E1-4. The inference error of the body part "legR" obtained based on the inference result R₁ is set as an inference error E1-5.

Inference result information obtained by inputting the extension data generated based on the attribute A₂ to the training target model 50 is set as inference result information R₂. The inference error of the body part "head" obtained based on the inference result R₂ is defined as an inference error E2-1. The inference error of the body part "armL" obtained based on the inference result R₂ is set as an inference error E2-2. The inference error of the body part "armR" obtained based on the inference result R₂ is set as an inference error E2-3. The inference error of the body part "legL" obtained based on the inference result R₂ is set as an inference error E2-4. The inference error of the body part "legR" obtained based on the inference result R₂ is set as an inference error E2-5.

Inference result information obtained by inputting extension data generated based on an attribute Aₙ to the training target model 50 is set as inference result information Rₙ. A natural number of 3 or more is represented by n. The inference error of the body part "head" obtained based on the inference result Rₙ is defined as an inference error En-1. The inference error of the body part "armL" obtained based on the inference result Rₙ is set as an inference error En-2. The inference error of the body part "armR" obtained based on the inference result Rₙ is set as an inference error En-3. The inference error of the body part "legL" obtained based on the inference result Rₙ is set as an inference error En-4. The inference error of the body part "legR" obtained based on the inference result Rₙ is set as an inference error En-5.

The integration unit 153 compares the inference errors E1-1 to En-1 of the body part "head", and specifies an inference error having the maximum value. In the present embodiment, as an example, it is assumed that the inference error E1-1 has the maximum value among the inference errors E1-1 to En-1. The attribute corresponding to the inference error E1-1 is the attribute A₁. In this case, the integration unit 153 specifies a weak point attribute of the body part "head" as the weak point attribute A₁.

The integration unit 153 compares the inference errors E1-2 to En-2 of the body part "armL", and specifies an inference error having the maximum value. In the present embodiment, as an example, it is assumed that the inference error E2-2 has the maximum value among the inference errors E1-2 to En-2. The attribute corresponding to the inference error E2-2 is the attribute A₂. In this case, the integration unit 153 specifies a weak point attribute of the body part "armL" as the weak point attribute A₂.

The integration unit 153 compares the inference errors E1-3 to En-3 of the body part "armR", and specifies an inference error having the maximum value. In the present embodiment, as an example, it is assumed that an inference error E3-3 has the maximum value among the inference errors E1-3 to En-3. The attribute corresponding to the inference error E3-3 is the attribute A₃. In this case, the integration unit 153 specifies a weak point attribute of the body part "armR" as the weak point attribute A₃. In FIG. 6, illustration of the attribute A₃ is omitted.

The integration unit 153 compares the inference errors E1-4 to En-4 of the body part "legL", and specifies an inference error having the maximum value. In the present embodiment, as an example, it is assumed that an inference error E4-4 has the maximum value among the inference errors E1-4 to En-4. The attribute corresponding to the inference error E4-4 is an attribute A₄. In this case, the integration unit 153 specifies a weak point attribute of the body part "legL" as the weak point attribute A₄. In FIG. 6, illustration of the attribute A₄ is omitted.

The integration unit 153 compares the inference errors E1-5 to En-5 of the body part "legR", and specifies an inference error having the maximum value. In the present embodiment, as an example, it is assumed that an inference error E5-5 has the maximum value among the inference errors E1-5 to En-5. The attribute corresponding to the inference error E5-5 is an attribute A₅. In this case, the integration unit 153 specifies a weak point attribute of the body part "legR" as the weak point attribute A₅. In FIG. 6, illustration of the attribute A₅ is omitted.

The integration unit 153 specifies each weak point attribute of each body part p by executing the processing illustrated in FIG. 6. In the following description, as an example, the weak point attribute of the body part "head" is set as the weak point attribute A₁. The weak point attribute of the body part "armL" is set as the weak point attribute A₂. The weak point attribute of the body part "armR" is set as the weak point attribute A₃. The weak point attribute of the body part "legL" is set as the weak point attribute A₄. The weak point attribute of the body part "legR" is set as the weak point attribute A₅.

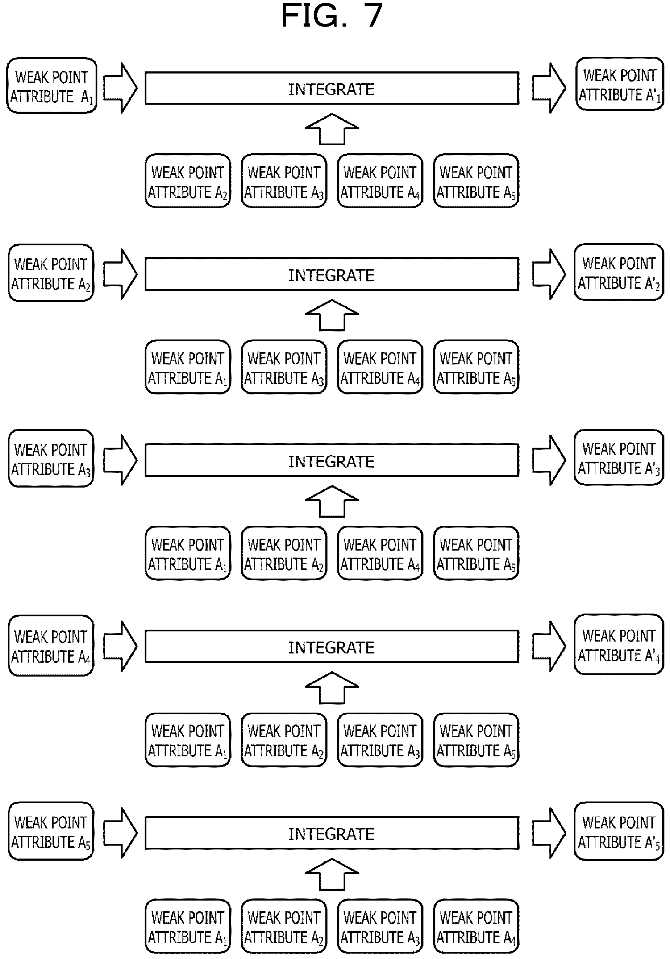

FIG. 7 is a diagram (2) for describing the processing of the integration unit. The integration unit 153 generates a weak point attribute A'₁ by integrating the weak point attribute A₁ to the weak point attribute A₅ based on the weak point attribute A₁. Similarly to the attribute, the weak point attribute A'₁ includes skeleton information, a camera parameter, and an appearance. The skeleton information regarding the weak point attribute A'₁ is skeleton information obtained by combining each of the joint coordinates of the body part "head" of the weak point attribute A₁, each of the joint coordinates of the body part "armL" of the weak point attribute A₂, each of the joint coordinates of the body part "armR" of the weak point attribute A₃, each of the joint coordinates of the body part "legL" of the weak point attribute A₄, and each of the joint coordinates of the body part "legR" of the weak point attribute A₅. The camera parameter and the appearance of the weak point attribute A'₁ diverts the camera parameter and the appearance of the base weak point attribute A₁.

The integration unit 153 generates a weak point attribute A'₂ by integrating the weak point attribute A₁ to the weak point attribute A₅ based on the weak point attribute A₂. Similarly to the attribute, the weak point attribute A'₂ includes skeleton information, a camera parameter, and an appearance. The skeleton information regarding the weak point attribute A'₂ is skeleton information obtained by combining each of the joint coordinates of the body part "head" of the weak point attribute A₁, each of the joint coordinates of the body part "armL" of the weak point attribute A₂, each of the joint coordinates of the body part "armR" of the weak point attribute A₃, each of the joint coordinates of the body part "legL" of the weak point attribute A₄, and each of the joint coordinates of the body part "legR" of the weak point attribute A₅. The camera parameter and the appearance of the weak point attribute A'₂ diverts the camera parameter and the appearance of the base weak point attribute A₂.

The integration unit 153 generates a weak point attribute A'₃ by integrating the weak point attribute A₁ to the weak point attribute A₅ based on the weak point attribute A₃. Similarly to the attribute, the weak point attribute A'₃ includes skeleton information, a camera parameter, and an appearance. The skeleton information regarding the weak point attribute A'₃ is skeleton information obtained by combining each of the joint coordinates of the body part "head" of the weak point attribute A₁, each of the joint coordinates of the body part "armL" of the weak point attribute A₂, each of the joint coordinates of the body part "armR" of the weak point attribute A₃, each of the joint coordinates of the body part "legL" of the weak point attribute A₄, and each of the joint coordinates of the body part "legR" of the weak point attribute A₅. The camera parameter and the appearance of the weak point attribute A'₃ diverts the camera parameter and the appearance of the base weak point attribute A₃.

The integration unit 153 generates a weak point attribute A'₄ by integrating the weak point attribute A₁ to the weak point attribute A₅ based on the weak point attribute A₄. Similarly to the attribute, the weak point attribute A'₄ includes skeleton information, a camera parameter, and an appearance. The skeleton information regarding the weak point attribute A'₄ is skeleton information obtained by combining each of the joint coordinates of the body part "head" of the weak point attribute A₁, each of the joint coordinates of the body part "armL" of the weak point attribute A₂, each of the joint coordinates of the body part "armR" of the weak point attribute A₃, each of the joint coordinates of the body part "legL" of the weak point attribute A₄, and each of the joint coordinates of the body part "legR" of the weak point attribute A₅. The camera parameter and the appearance of the weak point attribute A'₄ diverts a camera parameter and an appearance of the base weak point attribute A₄.

The integration unit 153 generates a weak point attribute A'₅ by integrating the weak point attribute A₁ to the weak point attribute A₅ based on the weak point attribute A₅. Similarly to the attribute, the weak point attribute A'₅ includes skeleton information, a camera parameter, and an appearance. The skeleton information regarding the weak point attribute A'₅ is skeleton information obtained by combining each of the joint coordinates of the body part "head" of the weak point attribute A₁, each of the joint coordinates of the body part "armL" of the weak point attribute A₂, each of the joint coordinates of the body part "armR" of the weak point attribute A₃, each of the joint coordinates of the body part "legL" of the weak point attribute A₄, and each of the joint coordinates of the body part "legR" of the weak point attribute A₅. The camera parameter and the appearance of the weak point attribute A'₅ diverts a camera parameter and an appearance of the base weak point attribute A₅.

The integration unit 153 generates the weak point attributes A'₁ to A'₅ by executing the processing described with reference to FIG. 7. The integration unit 153 generates extension data corresponding to each of the weak point attributes A'₁ to A'₅ by inputting the weak point attributes A'₁ to A'₅ to the image generation unit 152.

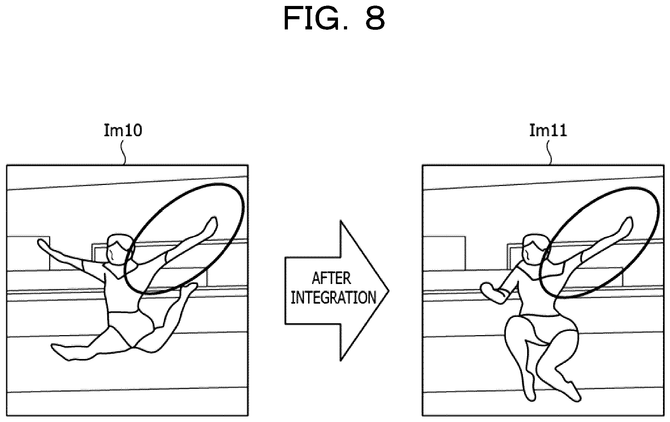

FIG. 8 is a diagram illustrating an example of the extension data generated by the attribute and the weak point attribute. For example, it is assumed that extension data Im10 is image data obtained by inputting the attribute A₂ to the image generation unit 152. When the extension data Im10 is input to the training target model 50, the inference error of the body part "armL" takes the maximum value as compared with other inference errors. Extension data Im11 is image data obtained by inputting the weak point attribute A'₂ to the image generation unit 152. When the extension data Im11 is input to the training target model 50, the inference error of each of the body parts "head", "armL", "armR", "legL", and "legR" takes the maximum value. In other words, new teacher data that is far from a distribution of existing teacher data may be generated.

The data generation device generates, as teacher data, a set of the extension data obtained by inputting the weak point attribute to the image generation unit 152 and the skeleton information included in the weak point attribute, and uses the teacher data for machine learning of the training target model 50.

As described above, the data generation device according to the present embodiment specifies the inference error for each body part p based on the inference result information obtained by inputting the extension data 40 to the training target model 50. The data generation device compares each inference error for each body part p calculated from each piece of the inference result information, and specifies the attribute (weak point attribute) of the inference result information with the maximum value of the inference error. The data generation device integrates the weak point attributes of each body part p and generates the extension data based on the integrated weak point attributes. Accordingly, the new teacher data that is far from the distribution of the existing teacher data may be generated.

Note that, in the above description, the data generation device specifies and integrates the weak point attributes based on the inference result information obtained as a result of inputting the extension data 40 to the training target model 50, but the present invention is not limited to this. For example, the teacher data 30 may be directly input to the training target model 50, and the weak point attributes may be specified and integrated based on the inference result information obtained as a result of the input to the training target model 50.

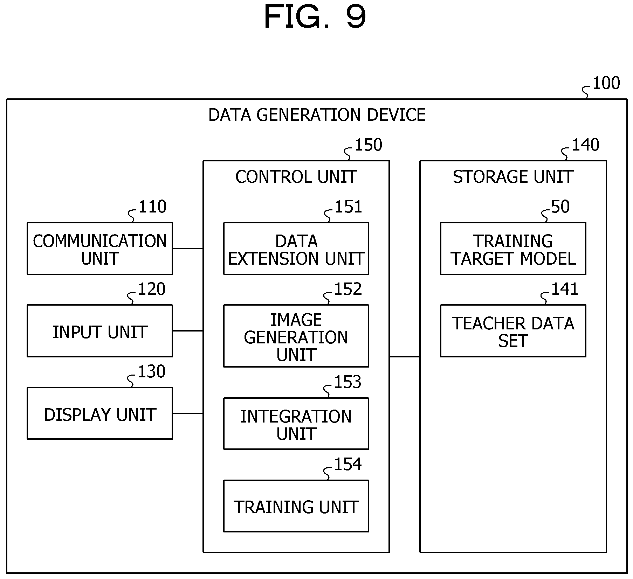

Next, a configuration example of the data generation device that executes the processing described above will be described. FIG. 9 is a functional block diagram illustrating a configuration of the data generation device according to the present embodiment. As illustrated in FIG. 9, a data generation device 100 includes a communication unit 110, an input unit 120, a display unit 130, a storage unit 140, and a control unit 150.

The communication unit 110 executes data communication with an external device or the like via a network. The communication unit 110 is a network interface card (NIC) or the like. The control unit 150 to be described later exchanges data with an external device via the communication unit 110.

The input unit 120 is an input device that inputs various types of information to the control unit 150 of the data generation device 100. For example, the input unit 120 corresponds to a keyboard, a mouse, a touch panel, or the like.

The display unit 130 is a display device that displays information output from the control unit 150.

The storage unit 140 includes the training target model 50 and a teacher data set 141. The storage unit 140 is a storage device such as a memory.

The training target model 50 is a machine learning model in which image data (extension data) is set as an input and an inference result of skeleton information is set as an output. The training target model 50 is a NN or the like.

The teacher data set 141 includes a plurality of pieces of teacher data. The teacher data includes image data of a person and an attribute. The attribute includes skeleton information, a camera parameter, and an appearance.

The control unit 150 includes the data extension unit 151, the image generation unit 152, the integration unit 153, and a training unit 154. The control unit 150 is a central processing unit (CPU), a graphics processing unit (GPU), or the like.

The parameter θ₁ is set in the data extension unit 151, and the data extension unit 151 extends an attribute of teacher data based on such a parameter θ₁. The data extension unit 151 outputs information regarding the extended attribute to the image generation unit 152. The data extension unit 151 trains the parameter θ₁ in a direction in which an inference error when extension data is input to the training target model 50 increases based on gradient information regarding the inference error fed back from the training target model 50. Other description regarding the data extension unit 151 is similar to the description regarding the data extension unit 151 described with reference to FIG. 3.

The image generation unit 152 generates extension data based on the information regarding the attribute extended by the data extension unit 151. Furthermore, the image generation unit 152 generates extension data based on information regarding a weak point attribute generated by the integration unit 153. The image generation unit 152 may add, to the teacher data set 141, a set of the information regarding the weak point attribute and the extension data as new teacher data.

The integration unit 153 specifies an inference error for each body part p for each piece of inference result information. The integration unit 153 compares each inference error for each body part p calculated from each piece of the inference result information, and specifies the maximum value of the inference error for each body part p and the attribute (weak point attribute) corresponding to the inference result information with the maximum value of the inference error. The integration unit 153 generates the weak point attribute by integrating the weak point attributes for each body part p. Other description regarding the integration unit 153 is similar to the description regarding the integration unit 153 described with reference to FIGs. 3 and 5 to 7.

The training unit 154 executes machine learning of the training target model 50 based on the teacher data set 141. For example, based on backpropagation, the training unit 154 updates the parameter θ₂ of the training target model 50 so as to reduce an error between an inference result output from the training target model 50 and a correct answer label when image data is input to the training target model 50.

A set of the image data and the correct answer label input to the training target model 50 by the training unit 154 is a set of first image data and a first correct answer label or a set of second image data and a second correct answer label to be described next.

The first correct answer label is skeleton information when the data extension unit 151 extends the attribute of the teacher data. The first image data is extension data generated by the image generation unit 152 based on the attribute of the teacher data extended by the data extension unit 151.

The second correct answer label is skeleton information regarding the weak point attributes integrated by the integration unit 153. The second image data is extension data generated by the image generation unit 152 based on the weak point attributes.

The training unit 154 feeds back the gradient information regarding the inference error to the data extension unit 151. The training unit 154 outputs, to the integration unit 153, a set of the inference result information indicating a relationship between the inference result and the true value (correct answer label) and the information regarding the attribute, for each joint of the skeleton information.

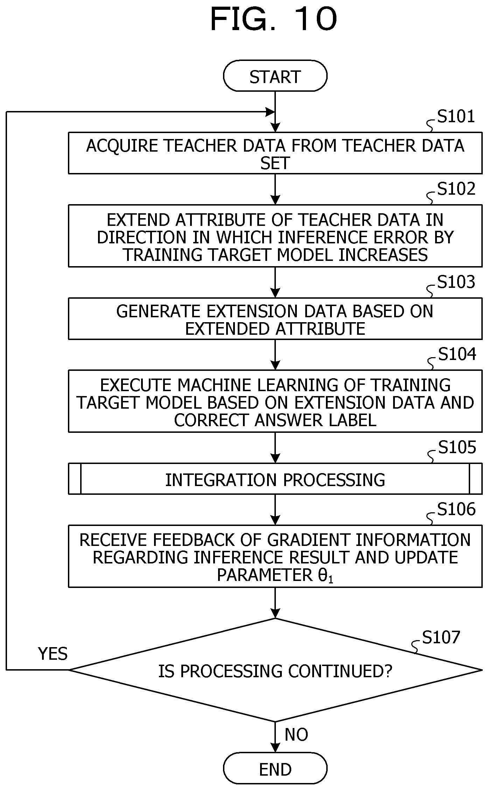

Next, an example of a processing procedure of the data generation device 100 according to the present embodiment will be described. FIG. 10 is a flowchart illustrating the processing procedure of the data generation device according to the present embodiment. As illustrated in FIG. 10, the data extension unit 151 of the data generation device 100 acquires teacher data from the teacher data set 141 (step S101). Based on the parameter θ₁, the data extension unit 151 extends an attribute of the teacher data in a direction in which an inference error by the training target model 50 increases (step S102).

The image generation unit 152 of the data generation device 100 generates extension data based on the extended attribute (step S103). The training unit 154 of the data generation device 100 executes machine learning of the training target model 50 based on the extension data and a correct answer label (step S104).

The integration unit 153 of the data generation device 100 executes integration processing (step S105).

The data extension unit 151 of the data generation device 100 receives feedback of gradient information regarding an inference result, and updates the parameter θ₁ (step S106).

In a case where the processing is continued (step S107, Yes), the data generation device 100 proceeds to step S101. On the other hand, in a case where the processing is not continued (step S107, No), the data generation device 100 ends the processing.

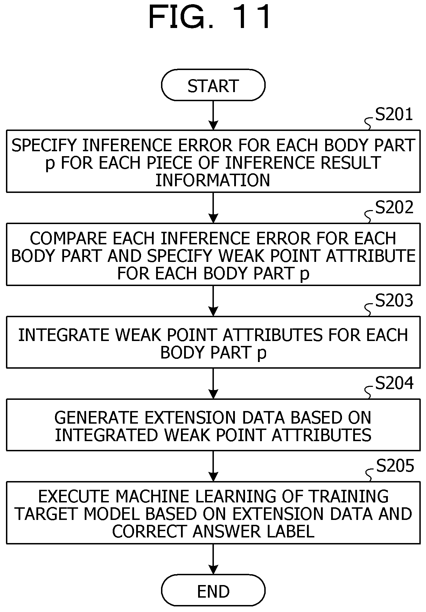

Next, an example of the integration processing indicated in step S105 in FIG. 10 will be described. FIG. 11 is a flowchart illustrating a processing procedure of the integration processing. As illustrated in FIG. 11, the integration unit 153 of the data generation device 100 specifies an inference error for each body part p for each piece of inference result information (step S201).

The integration unit 153 compares each inference error for each body part p and specifies a weak point attribute for each body part p (step S202). The integration unit 153 integrates the weak point attributes for each body part p (step S203).

The image generation unit 152 of the data generation device 100 generates extension data based on the integrated weak point attributes (step S204).

The training unit 154 of the data generation device 100 executes machine learning of the training target model 50 based on the extension data and a correct answer label (skeleton information regarding the weak point attributes) (step S205).

Next, an effect of the data generation device 100 according to the present embodiment will be described. The data generation device 100 specifies an inference error for each body part p based on inference result information obtained by inputting extension data to the training target model. The data generation device 100 compares each inference error for each body part p calculated from each piece of the inference result information, and specifies an attribute (weak point attribute) of the inference result information with the maximum value of the inference error. The data generation device 100 integrates the weak point attributes for each body part p and generates extension data based on the integrated weak point attributes. Accordingly, new teacher data that is far from a distribution of existing teacher data may be generated.

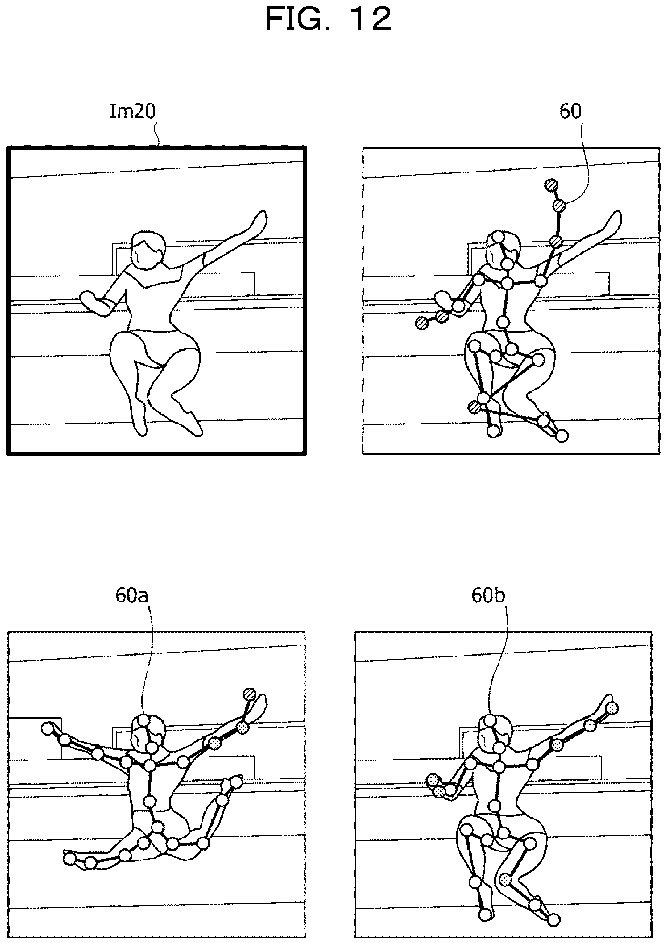

FIG. 12 is a diagram for describing the effect of the data generation device according to the present embodiment. Image data Im20 in FIG. 12 is extension data generated by the image generation unit 152 based on integrated weak point attributes. When the training unit 154 inputs the image data Im20 to the training target model 50, an inference result 60 is output. In the inference result 60, inference of the joints ar9 and ar20 and the joints ar5, ar6, and ar7 has failed. In other words, by executing machine learning using new image data (teacher data) that is the image data Im20 to be the new teacher data and is far from a distribution of existing teacher data, inference accuracy of the training target model 50 may be improved.

For example, inference results 60a and 60b are obtained by training the training target model 50 in a case where machine learning is performed using the new image data (teacher data) that is far from the distribution of the existing teacher data. In the inference result 60a, the inference fails in the joint ar19, but the inference accuracy is improved in the joints ar5 and ar6. In the inference result 60b, the inference accuracy of the joints ar9 and ar20, the joints ar5, ar6, and ar19, and the joint ar11 is improved.

Note that the processing of the data generation device 100 according to the present embodiment is not limited to the processing described above. For example, the data generation device 100 may execute a body detection task or a body region extraction (segmentation) task from image data. The data generation device 100 may execute the body detection task or the body region extraction task, specify a weak point attribute for each body part by referring to the body part having a large inference error, and apply the processing described above.

The processing of the data generation device 100 may also be applied to a task targeting not a body of a person but a more general articulated body such as a tetrapod. The processing of the data generation device 100 may be applied to both a 2D body skeleton estimation task and a 3D body skeleton estimation task. The processing of the data generation device 100 may also be applied to a 2D-to--3D skeleton estimation task that does not need image data.

The data generation device 100 may reject or correct data combined with unlikely skeleton information using a mechanism for evaluating likelihood of skeleton information regarding the skeleton information obtained by integrating weak point attributes. As the mechanism for evaluating the likelihood of the skeleton information, the data generation device 100 uses VPoser for evaluating a distance in a latent space of a posture generator, Penetration loss for evaluating penetration of a body model, and hyper-bending loss for evaluating bending of an elbow or a knee in an opposite direction. For example, a technology regarding the VPoser is a technology described in a document "G. Pavlakos et al., 'Expressive Body Capture: 3D Hands, Face, and Body from a Single Image', CVPR 201".

The data generation device 100 may immediately reject the unlikely skeleton information. Alternatively, the data generation device 100 may project the unlikely skeleton information onto a manifold of a likely skeleton (for example, the latent space of the VPoser) and performs correction to likely skeleton information. The data generation device 100 may select only some parts so as to maximize an inference error in a total of all parts within a range of the likely skeleton by combination optimization such as a greedy algorithm.

In a case where information regarding weak point attributes (integrated weak point attributes) generated by the integration unit 153 is acquired, the image generation unit 152 determines whether or not skeleton information regarding the integrated weak point attributes is likely skeleton information. For example, the image generation unit 152 holds information regarding an operation region for each joint, and determines that the skeleton information is the likely skeleton information in a case where each joint of the skeleton information is within a range of the operation region.

The data generation device 100 may specify and use a plurality of weak point attributes, which is Nw (> 1) weak point attributes, in descending order of an inference error for each body part. The data generation device 100 may generate a new weak point attribute with all combinations Nw^Np (Np is the number of parts). The data generation device 100 may select an optimal combination of weak point attributes from all the combinations Nw^Np by combination optimization with the likelihood of the skeleton information described above as a constraint.

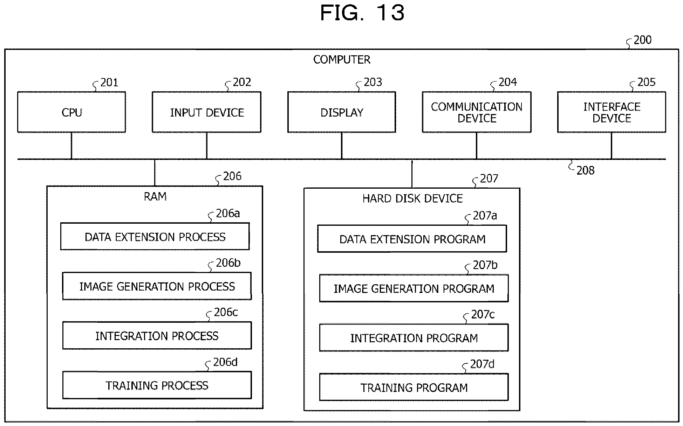

Next, an example of a hardware configuration of a computer that implements functions similar to those of the data generation device 100 described above will be described. FIG. 13 is a diagram illustrating an example of the hardware configuration of the computer that implements the functions similar to those of the data generation device of the embodiment.

As illustrated in FIG. 13, a computer 200 includes a CPU 201 that executes various types of arithmetic processing, an input device 202 that receives data input from a user, and a display 203. Furthermore, the computer 200 includes a communication device 204 that exchanges data with a camera 15, an external device, and the like via a wired or wireless network, and an interface device 205. Furthermore, the computer 200 includes a RAM 206 that temporarily stores various types of information, and a hard disk device 207. Additionally, each of the devices 201 to 207 is coupled to a bus 208.

The hard disk device 207 includes a data extension program 207a, an image generation program 207b, an integration program 207c, and a training program 207d. Furthermore, the CPU 201 reads each of the programs 207a to 207d and loads the read programs 207a to 207d into the RAM 206.

The data extension program 207a functions as a data extension process 206a. The image generation program 207b functions as an image generation process 206b. The integration program 207c functions as an integration process 206c. The training program 207d functions as a training process 206d.

Processing of the data extension process 206a corresponds to the processing of the data extension unit 151. Processing of the image generation process 206b corresponds to the processing of the image generation unit 152. Processing of the integration process 206c corresponds to the processing of the integration unit 153. Processing of the training process 206d corresponds to the processing of the training unit 154.

Note that each of the programs 207a to 207d does not necessarily have to be stored in the hard disk device 207 beforehand. For example, each of the programs is stored in a "portable physical medium" to be inserted into the computer 200, such as a flexible disk (FD), a CD-ROM, a DVD, a magneto-optical disk, or an IC card. Then, the computer 200 may read and execute each of the programs 207a to 207d.

### CITATION LIST

### PATENT DOCUMENT

Patent Document 1: Japanese Laid-open Patent Publication No. 2019-212106

### NON-PATENT DOCUMENT

Non-Patent Document 1: Y. Ge et al. "Neural-Sim: Learning to Generate Training Data with NeRF", ECCV 2022
Non-Patent Document 2: Gong et al., "PoseAug: A Differentiable Pose Augmentation Framework for 3D Human Pose Estimation", CVPR 2021
Non-Patent Document 3: S. Li et al., "Cascaded Deep Monocular 3D Human Pose Estimation with Evolutionary Training Data", CVPR 2020

### REFERENCE SIGNS LIST

50Training target model
100Data generation device
110Communication unit
120Input unit
130Display unit
140Storage unit
141Teacher data set
150Control unit
151Data extension unit
152Image generation unit
153Integration unit
154Training unit

## Claims

1. A data generation program for causing a computer to execute processing comprising:
acquiring an inference result of skeleton information for each piece of teacher data when a plurality of pieces of teacher data is input to a machine learning model, which includes an error of each part of a skeleton;
specifying first teacher data in which an error of a first part is greater than an error of the first part of another piece of the teacher data from the plurality of pieces of teacher data based on the inference result;
specifying second teacher data in which an error of a second part is greater than an error of the second part of another piece of the teacher data from the plurality of pieces of teacher data based on the inference result; and
generating third teacher data by replacing information regarding the second part included in the first teacher data with information regarding the second part included in the second teacher data.

2. The data generation program according to claim 1, the processing further comprising:
generating fourth teacher data by replacing information regarding the first part included in the second teacher data with information regarding the first part included in the first teacher data.

3. The data generation program according to claim 1, the processing further comprising:
executing machine learning on the machine learning model based on the third teacher data.

4. The data generation program according to claim 3, the processing further comprising:
determining whether or not a skeleton that includes the first part and the second part included in the third teacher data is likely, wherein
the executing of the machine learning includes executing the machine learning on the machine learning model based on the third teacher data in a case where the skeleton that includes the first part and the second part is likely.

5. A data generation method implemented by a computer, the data generation method comprising:
acquiring an inference result of skeleton information for each piece of teacher data when a plurality of pieces of teacher data is input to a machine learning model, which includes an error of each part of a skeleton;
specifying first teacher data in which an error of a first part is greater than an error of the first part of another piece of the teacher data from the plurality of pieces of teacher data based on the inference result;
specifying second teacher data in which an error of a second part is greater than an error of the second part of another piece of the teacher data from the plurality of pieces of teacher data based on the inference result; and
generating third teacher data by replacing information regarding the second part included in the first teacher data with information regarding the second part included in the second teacher data.

6. The data generation method according to claim 5, the data generation method further comprising:
generating fourth teacher data by replacing information regarding the first part included in the second teacher data with information regarding the first part included in the first teacher data.

7. The data generation method according to claim 5, the data generation method further comprising:
executing machine learning on the machine learning model based on the third teacher data.

8. The data generation method according to claim 7, the data generation method further comprising:
determining whether or not a skeleton that includes the first part and the second part included in the third teacher data is likely, wherein
the executing of the machine learning includes executing the machine learning on the machine learning model based on the third teacher data in a case where the skeleton that includes the first part and the second part is likely.

9. A data generation apparatus comprising a control unit configured to perform processing comprising:
acquiring an inference result of skeleton information for each piece of teacher data when a plurality of pieces of teacher data is input to a machine learning model, which includes an error of each part of a skeleton;
specifying first teacher data in which an error of a first part is greater than an error of the first part of another piece of the teacher data from the plurality of pieces of teacher data based on the inference result;
specifying second teacher data in which an error of a second part is greater than an error of the second part of another piece of the teacher data from the plurality of pieces of teacher data based on the inference result; and
generating third teacher data by replacing information regarding the second part included in the first teacher data with information regarding the second part included in the second teacher data.

10. The data generation apparatus according to claim 9, the processing further comprising:
generating fourth teacher data by replacing information regarding the first part included in the second teacher data with information regarding the first part included in the first teacher data.

11. The data generation apparatus according to claim 9, the processing further comprising:
executing machine learning on the machine learning model based on the third teacher data.

12. The data generation apparatus according to claim 11, the processing further comprising:
determining whether or not a skeleton that includes the first part and the second part included in the third teacher data is likely, wherein
the executing of the machine learning includes executing the machine learning on the machine learning model based on the third teacher data in a case where the skeleton that includes the first part and the second part is likely.
